# EUROPÄISCHE PATENTSCHRIFT

(11) **EP 0 929 836 B1**
(45) Veröffentlichungstag und Bekanntmachung des Hinweises auf die Patenterteilung: **09.08.2000**
(21) Anmeldenummer: 97912015.1
(22) Anmeldetag: 26.09.1997
(51) Int. Cl.: G02B 27/14, G02B 6/42, G02B 6/12

(54) **VERFAHREN ZUM HERSTELLEN EINES STRAHLTEILERFORMKÖRPERS UND VERWENDUNG DES STRAHLTEILERFORMKÖRPERS IN EINEM OPTOELEKTRONISCHEN MODUL**
METHOD FOR PRODUCING A BEAM-SPLITTING SHAPED BODY AND USE OF THE BEAM-SPLITTING SHAPED BODY IN AN OPTO-ELECTRONIC MODULE
PROCEDE POUR PRODUIRE UN CORPS FA ONNE SEPARATEUR DE FAISCEAUX ET UTILISATION DE CE DERNIER DANS UN MODULE OPTOELECTRONIQUE

(30) Priorität: 30.09.1996 DE 19640236
(43) Veröffentlichungstag der Anmeldung: 21.07.1999
(73) Patentinhaber: SIEMENS AKTIENGESELLSCHAFT, 80333 München (DE)
(72) Erfinder: GRAMANN, Wolfgang, D-93053 Regensburg (DE); SPÄTH, Werner, D-83607 Holzkirchen (DE)
(86) Internationale Anmeldenummer: DE9702201
(87) Internationale Veröffentlichungsnummer: WO9814818

(56) Entgegenhaltungen:
- EP-A- 0 359 658
- WO-A-96/05525
- CH-A- 651 939
- US-A- 4 627 688
- US-A- 4 733 926
- PATENT ABSTRACTS OF JAPAN vol. 008, no. 271 (P-320), 12.Dezember 1984 & JP 59 139003 A (SONY KK), 9.August 1984,

## Beschreibung

Die Erfindung bezieht sich auf ein Verfahren zum Herstellen eines Strahlteilerformkörpers gemäß dem Oberbegriff des Anspruches 1.

Derartige Strahlteilerformkörper, z. B. Prismenwürfel, sind bekannt. Die bekannten Herstellungsverfahren für solche Prismenwürfel sind sehr aufwendig und somit kostenintensiv. Für die Herstellung von kostengünstigen optoelektronischen Bauelementen ist daher bislang der Einsatz von Prismenwürfeln nicht vorgesehen.

Aus der EP-A-359 658 ist ein Verfahren zur Herstellung von mehreren Strahlteilerkörpern bekannt. Die Herstellung erfolgt durch Sägen mit herkömmlichen Mitteln in einem Winkel zu einer Anordnung mehrerer übereinandergeschichteter Scheiben.

Der Erfindung liegt die Aufgabe zugrunde, ein Verfahren zur Herstellung von Strahlteilerformkörpern zu entwickeln, das möglichst wenige technisch aufwendige Verfahrensschritte aufweist.

Diese Aufgabe wird durch ein Verfahren mit den Merkmalen des Anspruches 1 gelöst.

Erfindungsgemäß sind bei der ersten Lösung folgende aufeinanderfolgende Verfahrensschritte vorgesehen:
a) Herstellen einer ersten Scheibe, bestehend aus strahlungsdurchlässigem Material,
b) Aufbringen der Strahlteilerschicht auf eine Hauptfläche der ersten Scheibe,
c) Aufbringen einer zweiten Scheibe, bestehend aus strahlungsdurchlässigem Material, auf die Strahlteilerschicht,
d) Durchtrennen des die erste Scheibe, die Strahlteilerschicht und die zweite Scheibe aufweisenden Scheibenverbundes entlang von parallel zueinander verlaufenden Trennungslinien schräg oder senkrecht zur Strahlteilerschicht, derart, daß voneinander getrennte Stäbe erzeugt werden, die jeweils einen ersten Scheibenstreifen und einen zweiten Scheibenstreifen aufweisen, zwischen denen die Strahlteilerschicht angeordnet ist,
e) Schleifen und/oder Polieren jeweils des ersten und des zweiten Scheibenstreifens der Stäbe, derart, daß die senkrecht zur Strahlteilerschicht liegende Querschnittsfläche der Stäbe im wesentlichen eine vorgesehene entsprechende Querschnittsfläche des Strahlteilerformkörpers erhält und
f) falls vorgesehen, Durchtrennen der Stäbe quer zu ihrer Längsachse in einzelne Strahlteilerformkörper.

Die zweite erfindungsgemäße Lösung weist folgende aufeinanderfolgende Verfahrensschritte auf:
a) Herstellen einer ersten Scheibe, bestehend aus strahlungsdurchlässigem Material,
b) Aufbringen der Strahlteilerschicht auf eine Hauptfläche der ersten Scheibe,
c) Aufbringen einer zweiten Scheibe, bestehend aus strahlungsdurchlässigem Material, auf die Strahlteilerschicht,
d) Durchtrennen der zweiten Scheibe und Ansägen der Strahlteilerschicht entlang von parallel zueinander verlaufenden Trennungslinien mittels eines Trennwerkzeugs mit V-förmigem Schnittprofil, derart, daß voneinander getrennte erste Scheibenstreifen entstehen,
e) Befestigen des die erste Scheibe, die zweite Scheibe und die Strahlteilerschicht aufweisenden Verbundes auf einer Trägerplatte, derart, daß die ersten Scheibenstreifen der Trägerplatte zugewandt sind,
f) Durchtrennen der ersten Scheibe und der Strahlteilerschicht entlang der parallel zueinander verlaufenden Trennungslinien mittels eines Trennwerkzeugs mit V-förmigem Schnittprofil, derart, daß voneinander getrennte, den ersten Scheibenstreifen gegenüberliegende zweite Scheibenstreifen erzeugt werden und somit voneinander getrennte Strahlteilerformkörperbarren ausgebildet werden, deren senkrecht zur Strahlteilerschicht liegende Querschnittsfläche im wesentlichen eine vorgesehene entsprechende Querschnittsfläche des Strahlteilerformkörpers aufweist, und
g) falls vorgesehen, Durchtrennen der Stäbe quer zu ihrer Längsachse.

Vorteilhafte Weiterbildungen und Ausführungsformen des erfindungsgemäßen Verfahrens sind Gegenstand der Unteransprüche 3 bis 5. Bevorzugte Verwendungen der nach dem erfindungsgemäßen Verfahren hergestellten Strahlteilerformkörper sind in den Ansprüchen 6 bis 13 angegeben.

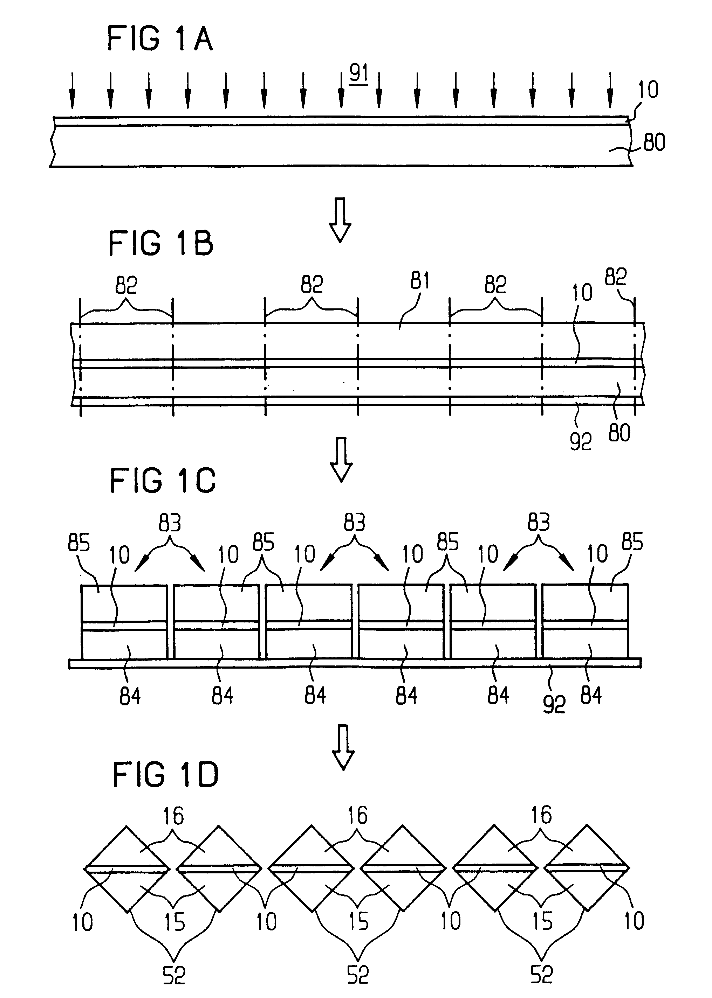

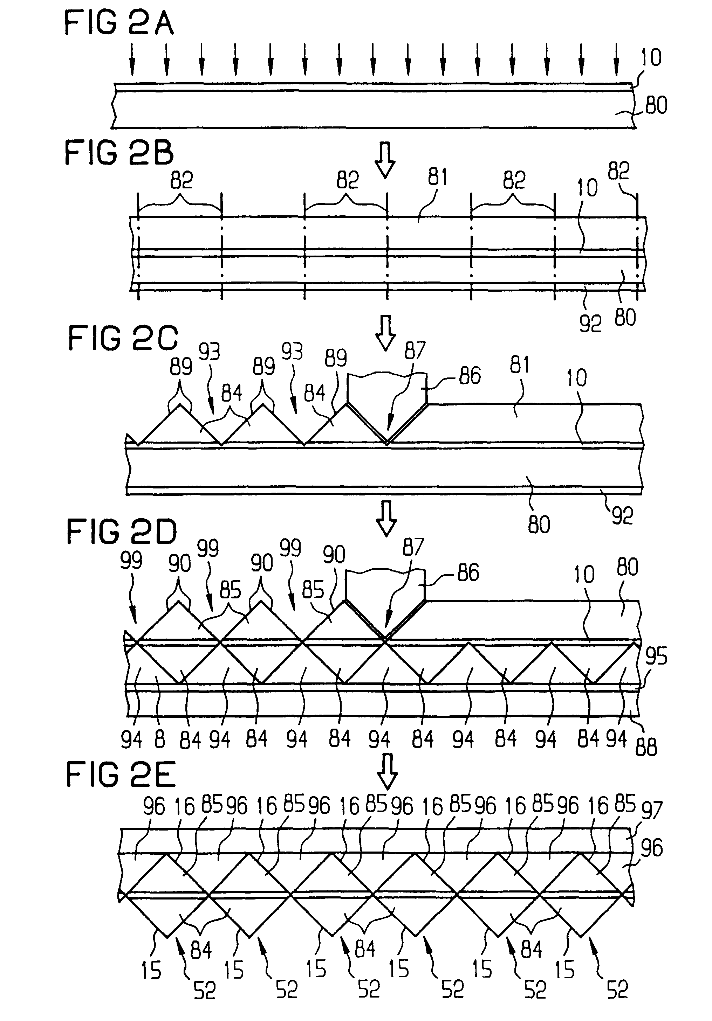

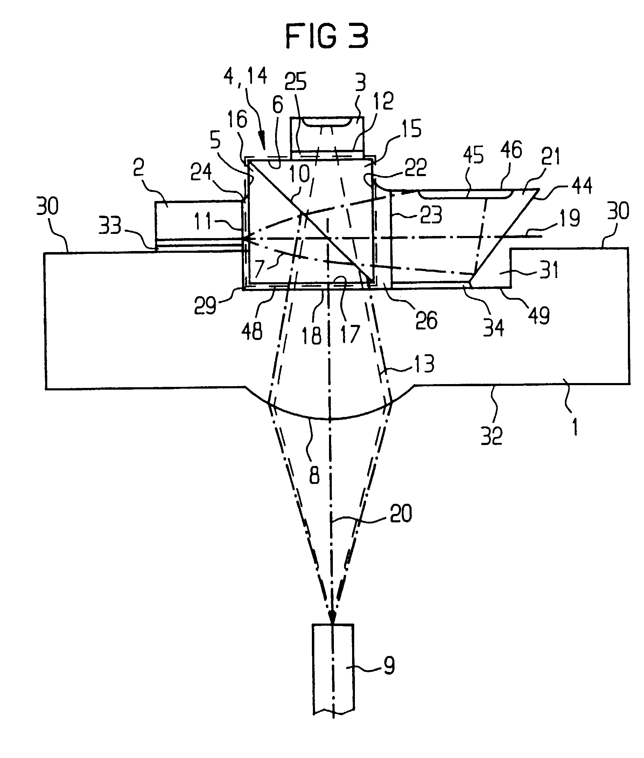

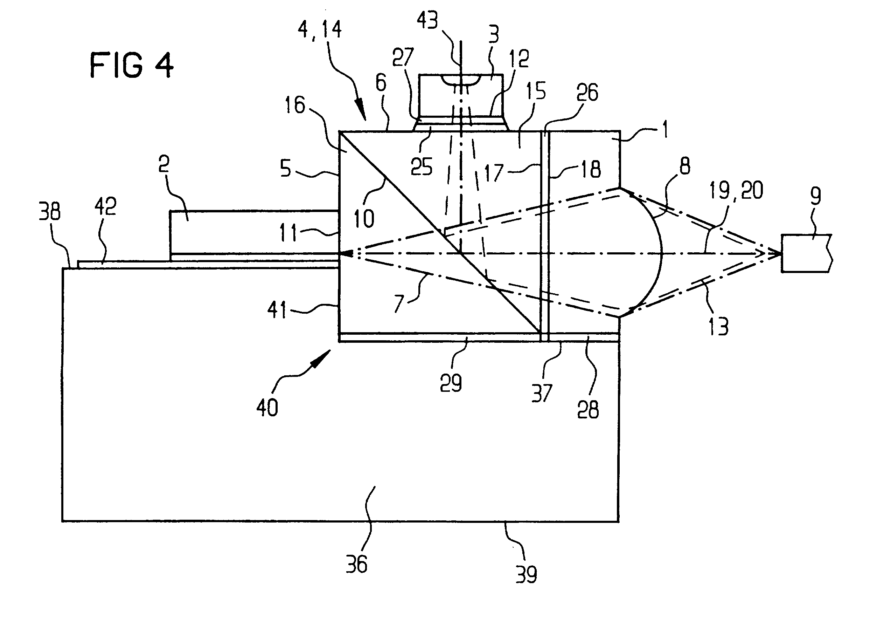

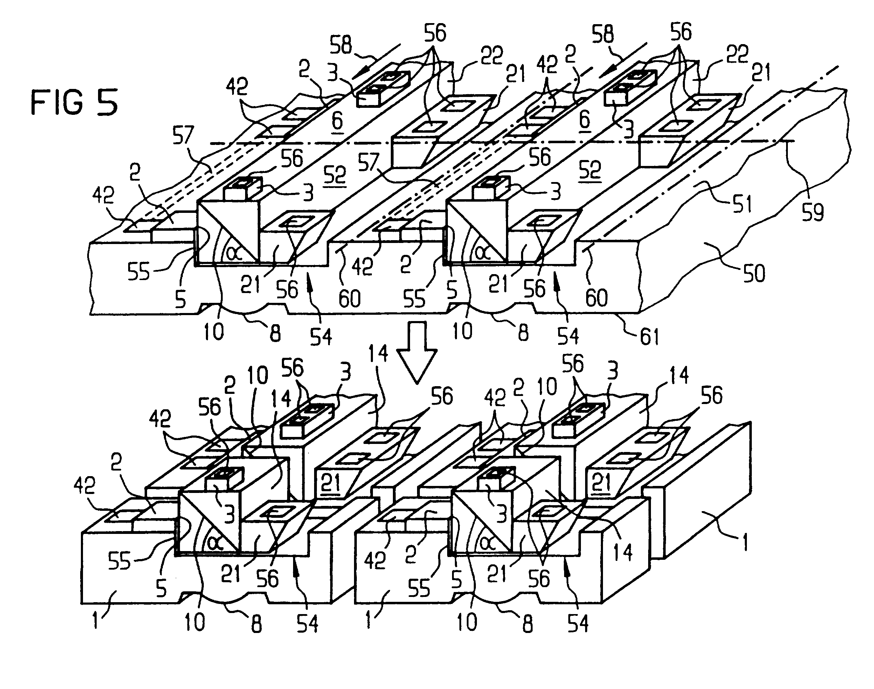

Die erfindungsgemäßen Verfahren werden im folgenden anhand von zwei Ausführungsbeispielen in Verbindung mit den Figuren 1 und 2 und die bevorzugten Verwendungen der nach den erfindungsgemäßen Verfahren hergestellten Strahlteilerformkörper werden anhand von zwei Ausführungsbeispielen in Verbindung mit den Figuren 3 bis 5 näher erläutert. Es zeigen: Figur 1 eine schematische Darstellung des Ablaufs eines Ausführungsbeispieles des ersten erfindungsgemäßen Verfahrens, Figur 2 eine schematische Darstellung des Ablaufs eines Ausführungsbeispieles des zweiten erfindungsgemäßen Verfahrens, Figur 3 eine schematische Schnittansicht eines ersten optoelektronischen Moduls mit einem nach dem erfindungsgemäßen Verfahren hergestellten Strahlteilerformkörper, Figur 4 eine schematische Schnittansicht eines zweiten optoelektronischen Moduls mit einem nach dem erfindungsgemäßen Verfahren hergestellten Strahlteilerformkörper und Figur 5 eine schematische Darstellung zur Erläuterung eines Verfahrensablaufes zur gleichzeitigen Herstellung einer Mehrzahl von optoelektronischen Modulen gemäß Figur 3.

In den Figuren sind gleiche oder gleichwirkende Bestandteile jeweils mit demselben Bezugszeichen versehen.

Bei dem in Figur 1 schematisch dargestellten Verfahren wird zunächst (Teilbild A) auf eine erste strahlungsdurchlässige Scheibe 80, z. B. bestehend aus Quarz, Borsilikatglas, Saphir, Si, GaP oder aus einem anderen geeigneten Halbleitermaterial eine Strahlteilerschicht 10 aufgebracht. Diese Strahlteilerschicht 10 kann beispielsweise eine 3dB-Teilerschicht oder eine WDM(Wellenlängen-Divisions-Multiplex)-Filterschicht sein, die z. B. als Kurzwellenpass, Langwellenpass oder Dämpfungsfilter ausgebildet ist. Das Aufbringen der Strahlteilerschicht 10 ist in Teilbild A von Figur 1 durch Pfeile 91 angedeutet.

Nachfolgend (Teilbild B) wird auf die Strahlteilerschicht 10 eine zweite strahlungsdurchlässige Scheibe 81 aufgebracht, die beispielsweise wiederum aus Quarz, Borsilikatglas, Saphir, Si, GaP oder aus einem anderen geeigneten Halbleitermaterial besteht. Diese wird z. B. mittels eines Klebstoffes (z. B. Duroplast: Epoxidharz, Silikongummi) auf der Strahlteilerschicht 10 befestigt. Ist die der zweiten Scheibe 81 zugewandte Oberfläche der Strahlteilerschicht 10 eine Siliziumschicht (z. B. α-Silizium) und die zweite Scheibe 81 aus Glas, so können diese beiden Komponenten mittels anodischem Bonden verbunden werden. Bei dieser bekannten Technik werden die beiden zu verbindenden Flächen aufeinandergelegt, auf beispielsweise etwa 450°C aufgeheizt, und an das Glas gegenüber dem Silizium eine Spannung von beispielsweise -1000 V angelegt.

Danach wird der Verbund aus erster Scheibe 80, Strahlteilerschicht 10 und zweiter Scheibe 81 mit einer freien Hauptfläche einer der beiden Scheiben 80,81 auf eine Adhäsionsfolie 92 laminiert und entlang von parallel zueinander verlaufenden Trennlinien 82 senkrecht zur Strahlteilerschicht 10 z. B. mittels Sägen in einzelne nur über die Adhäsionsfolie 92 untereinander verbundene Stäbe 83 durchtrennt. Jeder dieser Stäbe 83 besteht aus einem ersten Scheibenstreifen 84, einer Strahlteilerschicht 10 und einem zweiten Scheibenstreifen 85 (man vergleiche hierzu Teilbild C).

Durch Schleifen und/oder Polieren der Seitenflächen der ersten und zweiten Scheibenstreifen 84,85 wird anschließend die senkrecht zur Strahlteilerschicht 10 liegende Querschnittsfläche der Stäbe 83 in die gewünschte Form, z. B. Sechseck, Rechteck oder Quadrat gebracht. Es liegen dann beispielsweise sogenannte Prismenbarren 52 vor, die aus einem ersten Prisma 15 und einem zweiten Prisma 16 und einer zwischen diesen angeordneten Strahlteilerschicht 10 bestehen. Diese können dann beispielsweise wie in Figur 5 gezeigt weiterverarbeitet werden oder mittels Zersägen sofort auf ihre endgültige Länge gebracht und anschließend weiterverarbeitet werden.

Optional können die Seitenflächen der Prismen 15,16 beispielsweise mittels Ionplating oder Hydrothermalabscheidung usw. mit einem entspiegelnden Material beschichtet werden.

Das in Figur 2 dargestellte Verfahren unterscheidet sich von dem vorgenannten Verfahren insbesondere dadurch, daß nach dem Aufkleben des Verbundes auf die Adhäsionsfolie 92 (Teilbild B) die auf der dieser gegenüberliegenden Seite der Strahlteilerschicht 10 angeordnete Scheibe 81 mittels eines Sägeblattes 86 mit V-förmigem Schnittprofil 87 mit aneinandergrenzenden ersten V-Nuten 93 versehen wird (Teilbild C). Die ersten V-Nuten 93 reichen bis in die Strahlteilerschicht 10 hinein. Danach wird der Verbund z. B. mittels Wachs 94 auf einer Trägerplatte 88 befestigt, derart, daß die mit den ersten V-Nuten 93 versehenen Seite des Verbundes der Trägerplatte zugwandt ist. Zwischen der Trägerplatte 88 und dem Verbund befindet sich auf der Trägerplatte 88 beispielsweise eine Papierschicht 95.

Als nächster Schritt (Teilbild D) wird die Scheibe 80 genau mittig gegenüber den ersten V-Nuten ebenfalls mittels eines Sägeblattes 86 mit V-förmigem Schnittprofil 87 mit aneinandergrenzenden zweiten V-Nuten 99 versehen, die ebenfalls in die Strahlteilerschicht 10 hineinreichen und diese durchtrennen. Damit liegen mehrere Prismenbarren 52 vor, die im wesentlichen die engültige Form der senkrecht zur Strahlteilerschicht 10 liegenden Querschnittsfläche der vorgesehenen Strahlteilerformkörper aufweisen.

Um die Prismenbarren 52 für weitere Verfahrensschritte in einem geordneten Verbund zu fixieren, werden die noch auf der Trägerplatte 88 fixierten Prismenbarren 52 beispielsweise mittels eines Epoxidharzes 96 an einem Haltestab 97 befestigt (Teilbild E). Danach wird der Verbund von der Trägerplatte 88 abgelöst, so daß eine Mehrzahl von an dem Haltestab 97 befestigten einzelnen Prismenbarren 52 ausgebildet wird. Diese können dann beliebig weiterverarbeitet werden, z. B. mittels Durchtrennen der Prismenbarren 52 zu Prismenwürfeln oder Prismenquadern oder, wie in Figur 5 gezeigt, Aufbringen auf eine Substratscheibe zur Herstellung von optoelektronischen Modulen.

Ein besonderer Vorteil der oben beschriebenen erfindungsgemäßen Verfahren ist, daß mehrere Strahlteilerformkörper mit beliebiger Querschnittsfläche im Scheibenverbund, d. h. im Nutzen. hergestellt werden können.

Optional können auch hier die Seitenflächen der Prismen 15,16 beispielsweise mittels Ionplating oder Hydrothermalabscheidung usw. mit einem entspiegelnden Material beschichtet werden.

Selbstverständlich können mittels den oben beschriebenen Verfahren nicht nur im Querschnitt quadratische Strahlteilerformkörper sondern durch Änderung der Schleif-/Polierprozesse bzw. des Sägeblattprofils verschiedenartigste Querschnittsflächenformen, wie beispielsweise rechteckige, sechseckige usw., hergestellt werden.

Bei dem optoelektronischen Modul von Figur 3 ist an einer ersten Hauptfläche 30 eines Trägerteiles 1 eine Ausnehmung 31 und an einer der ersten Hauptfläche 30 gegenüberliegenden zweiten Hauptfläche 32 des Trägerteiles 1 ein Strahlungsfokussiermittel 8 zum Fokussieren von Strahlung, in diesem Fall eine sphärische Sammellinse, ausgebildet. Auf der Bodenfläche 49 der Ausnehmung 31 ist mittels eines strahlungsdurchlässigen Verbindungsmittels 29, z. B. ein transparenter Klebstoff, als Strahlteilereinrichtung 4 ein Strahlteilerformkörper, in diesem Fall ein Prismenwürfel 14 befestigt. Der Prismenwürfel 14 besteht aus zwei zusammengefügten optischen Prismen 15,16, zwischen denen die Strahlteilerschicht 10 angeordnet ist. Die Strahlteilerschicht 10 liegt auf einer diagonalen Ebene des Prismenwürfels 14. Selbstverständlich ist dieses Ausführungsbeispiel nicht ausschließlich auf die Verwendung eines Prismenwürfels 14 beschränkt. Es kann ebenso anstelle des Prismenwürfels beispielsweise ein Prismenquader mit einer quadratischen oder rechteckigen senkrecht zur Strahlteilerschicht 10 liegenden Schnittfläche verwendet sein.

Auf der ersten Hauptfläche 30 des Trägerteiles 1 ist benachbart zu einer ersten Seitenfläche 5 des Prismenwürfels 14 ein Sendebauelement 2, beispielsweise ein Fabry-Perot- oder ein DFB-Laser, also ein Kantenemitter, derart befestigt, daß eine Sendebauelement-Strahlenaustrittsfläche 11 des Sendebauelements 2 parallel zur ersten Seitenfläche 5 des Prismenwürfels 14 liegt. Als Verbindungsmittel 33 zwischen dem Sendebauelement 2 und dem Trägerteil 1 ist beispielsweise ein Lot oder ein Klebstoff verwendet. Optional sind, wie in Figur 4 und Figur 5 gezeigt, auf der ersten Hauptfläche 30 des Trägerteiles 1 strukturierte Metallisierungsschichten 42 aufgebracht, die mit elektrischen Anschlüssen des Sendebauelements 2 verbunden sind und die als externe elektrische Anschlüsse für das Sendebauelement 2 dienen. Das Sendebauelement 2 kann dazu direkt mit seinen elektrischen Anschlüssen auf den Metallisierungschichten 42 aufliegen und mit diesen beispielsweise mittels eines Lotes elektrisch leitend verbunden sein.

Die Sendebauelement-Strahlenaustrittsfläche 11 kann wahlweise direkt auf der ersten Seitenfläche 5 des Prismenwürfels aufliegen oder auch in einem Abstand dazu angeordnet sein. Im zweiten Fall kann der Zwischenraum zwischen der Strahlenaustrittsfläche 11 und der ersten Seitenfläche 5 des Prismenwürfels 14, wie in Figur 3 gezeigt, mit einem strahlungsdurchlässigen Koppelmedium 24 gefüllt sein, dessen Brechungsindex gegenüber dem von Luft erhöht ist. Dadurch können Reflexionsverluste aufgrund stark unterschiedlicher Brechungsindizes von Luft und Halbleitermaterial bzw. Material des Prismenwürfels verringert werden. Idealerweise weist die Sendebauelement-Strahlenaustrittsfläche 11 zur ersten Seitenfläche 5 physikalischen Kontakt auf.

Auf einer senkrecht zur ersten Seitenfläche 5 und parallel zur ersten Hauptfläche 30 des Trägerteiles 1 liegenden zweiten Seitenfläche 6 des Prismenwürfels 14 ist mittels eines strahlungsdurchlässigen Verbindungsmittels 25 ein Empfangsbauelement 3, z. B. eine Fotodiode, befestigt. Die Empfangsbauelement-Strahleneintrittsfläche 12 des Empfangsbauelements 3 ist der zweiten Seitenfläche 6 zugewandt. Idealerweise weist die Empfangsbauelement-Strahlenaustrittsfläche 12 zur zweiten Seitenfläche 6 wiederum physikalischen Kontakt auf. Der Prismenwürfel 14 ist derart angeordnet, daß die Strahlteilerschicht 10 in einer Ebene liegt, die zwischen dem Sendebauelement 2 und dem Empfangsbauelement 3 angeordnet ist und die mit der ersten Hauptfläche 30 des Trägerteiles 1 einen Winkel von 45° einschließt.

Auf der dem Sendebauelement 2 gegenüberliegenden Seite des Prismenwürfel 14 ist ebenfalls in der Ausnehmung 31 des Trägerteiles 1 mittels eines Verbindungsmittels 34, z. B. ein metallisches Lot oder ein Klebstoff, eine Monitordiode 21 befestigt. Diese Monitordiode 21 dient im wesentlichen dazu, die von dem Sendebauelement 2 ausgesandte Strahlung 7 auf ihre Wellenlänge hin zu überprüfen. Dazu ist die Strahlteilerschicht 10 so ausgebildet, daß sie einen Teil der ausgesandten Strahlung 7 durchläßt.

Die Monitordiode 21 ist so angeordnet, daß eine Monitordioden-Strahleneintrittsfläche 23 einer der ersten Seitenfläche 5 gegenüberliegenden vierten Seitenfläche 22 des Prismenwürfels 14 zugewandt ist. Ein Zwischenraum zwischen der vierten Seitenfläche 22 des Prismenwürfels 14 und der Monitordioden-Strahleneintrittsfläche 23 ist mittels eines transparenten Koppelmediums 26, z. B. ein transparentes Epoxidharz, gefüllt. Dadurch können wiederum Reflexionsverluste der Strahlung auf dem Weg zur Monitordiode 21 verringert werden.

Eine der Monitordioden-Strahleneintrittsfläche 23 gegenüberliegende Seitenfläche 44 der Monitordiode 21 ist derart abgeschrägt, daß sie zumindest einen Teil der in die Monitordiode 21 eindringenden Strahlung zu einem Strahlung detektierenden pn-Übergang 45 der Monitordiode 21 hin reflektiert. Sie schließt mit einer dem pn-Übergang 45 am nächsten liegenden Seitenfläche 46 der Monitordiode einen Winkel ein, der kleiner als 90° ist. Zusätzlich kann sie beispielsweise mit einer reflexionssteigernden Schicht versehen sein.

Das Sendebauelement 2, das Empfangsbauelement 3, der Prismenwürfel 14, und das Strahlungsfokussiermittel 8, sind derart ausgebildet und zueinander angeordnet, daß im Betrieb des optotelektronischen Moduls zumindest ein Teil einer von dem Sendebauelement 2 ausgesandten Strahlung 7 nach Durchtritt durch das Strahlungsfokussiermittel 8 in eine, in Ausbreitungsrichtung der ausgesandten Strahlung 7 betrachtet, dem Strahlungsfokussiermittel 8 nachgeordneten optische Vorrichtung 9 eingekoppelt wird und daß zumindest ein Teil einer aus der optischen Vorrichtung 9 ausgekoppelten, empfangenen Strahlung 13 nach Durchtritt durch das Strahlungsfokussiermittel 8 und durch den Prismenwürfel 14 in das Empfangsbauelement 3 eingekoppelt wird.

Dazu ist der Prismenwürfel 14 aus einem für die ausgesandte Strahlung 7 und die empfangene Strahlung 13 durchlässigen Material gefertigt (z. B. Quarz, Borsilikatglas, Saphir oder Halbleitermaterial (man vergleiche dazu beispielsweise die unten für das Trägerteil angegebenen Halbleitermaterialien)). Die Strahlteilerschicht 10 ist derart ausgebildet, daß sie die ausgesandte Strahlung 7 größtenteils reflektiert und die empfangene Strahlung 13 soweit als möglich durchläßt. Derartige Strahlteilerschichten 10, sind in der optischen Technik bekannt, z. B. 3dB-Teiler oder WDM(Wellenlängen-Divisions-Multiplex)-Filter, und werden von daher an dieser Stelle nicht näher erläutert. Optional ist auf die Seitenflächen 5,6,17,22 des Prismenwürfels eine Antireflexbeschichtung 48 (gestrichelt eingezeichnet) aufgebracht.

Die Strahlachse 19 der ausgesandten Strahlung 7 und die Strahlachse 20 der empfangenen Strahlung 13 stehen bei diesem Ausführugnsbeispiel senkrecht aufeinander.

Der Vollständigkeit halber sei an dieser Stelle erwähnt, daß die ausgesandte Strahlung 7 und die empfangene Strahlung 13 vorteilhafterweise unterschiedliche Wellenlängen λ aufweisen. Dies gilt für alle in dieser Anmeldung beschriebenen Ausführungsbeispiele des erfindungsgemäßen optoelektronischen Moduls.

Die optische Vorrichtung 9 ist beispielsweise, wie in der Figur 3 angedeutet, ein Lichtwellenleiter, eine Linsenanordnung oder ein weiteres optoelektronisches Modul usw..

Das Trägerteil 1 einschließlich dem Strahlungsfokussiermittel 8 besteht aus einem Material, das ebenfalls sowohl für die ausgesandte Strahlung 7 als auch für die empfangene Strahlung 13 durchlässig ist. Hierzu eignet sich beispielsweise Glas, Kunststoff, Saphir, Diamant oder ein Halbleitermaterial, das für die ausgesandte Strahlung 7 und für die empfangene Strahlung 13 durchlässig ist. Für Wellenlängen λ > 400 nm kann diesbezüglich beispielsweise SiC, für λ > 550 nm GaP, für λ > 900 nm GaAs und für λ > 1100 nm kann Silizium verwendet sein.

Das Strahlungsfokussiermittel 8 kann beispielsweise eine Sammellinse mit einer sphärischen oder asphärischen Oberfläche sein, die mittels Ätzen oder Schleifen hergestellt ist. Ebenso kann als Strahlungsfokussiermittel 8 ein diffraktives optisches Element, ein holographisches optisches Element oder eine Fresnellinse verwendet sein, die mittels Ätzen, Schleifen oder Fräsen hergestellt ist. Die Ausnehmung 31 ist beispielsweise mittels Ätzen oder Fräsen hergestellt.

Die Ausnehmung 31 kann alternativ auch mittels zweier separat hergestellter Formteile, die auf dem Trägerteil 1 mit einem Abstand zueinander befestigt sind, realisiert sein. Ebenso kann auch das Strahlungsfokussiermittel 8 alternativ zum oben Beschriebenen separat hergestellt und am Trägerteil 1 z. B. mittels eines strahlungsdurchlässigen Lotes oder Klebstoffes befestigt sein. Besteht das Trägerteil 1 beispielsweise aus - Silizium und das Strahlungsfokussiermittel 8 aus Glas, so können diese beiden Komponenten auch mittels anodischem Bonden miteinander verbunden sein.

Um, falls erforderlich, die aktiven Komponenten des optoelektronischen Moduls, d. h. das Sendebauelement 2, das Empfangsbauelement 3, und die Monitordiode 21 vor Umgebungseinflüssen zu schützen, kann die gesamte funktionelle Einheit, bestehend aus diesen drei Bauteilen und dem Prismenwürfel 14 mit einer im wesentlichen aus Kunststoff oder aus einem anderen Vergußmaterial bestehenden Vergußumhüllung, beispielsweise ein Epoxidharz oder ein anderer geeigneter Kunststoff, vergossen sein. Ebenso kann das erfindungsgemäße optoelektronische Modul ein hermetisch dichtes Metallgehäuse mit einem optischen Fenster aufweisen.

Das in Figur 4 dargestellte optoelektronische Modul unterscheidet sich von dem gemäß Figur 3 insbesondere dadurch, daß das Strahlungsfokussiermittel 8 auf der dem Sendebauelement 2 gegenüberliegenden Seite des Prismenwürfels 14 angeordnet ist und daß die Strahlteilerschicht 10 derart ausgebildet, daß sie die ausgesandte Strahlung 7 größtenteils durchläßt und daß sie die empfangene Strahlung 13 größtenteils reflektiert. Die Strahlachse 19 der ausgesandten Strahlung 7 und die Strahlachse 20 der empfangenen Strahlung 13 verlaufen parallel zueinander, liegen insbesondere aufeinander. Die Strahlachse 43 des an der Strahlteilerschicht 10 reflektierten Teiles der empfangenen Strahlung 13 steht senkrecht auf der Strahlachse 19 der empfangenen Strahlung 13.

Das Sendebauelement 2, der Prismenwürfel 14 und das Strahlungsfokussiermittel 8 sind beispielsweise mittels Kleben oder Löten auf einem gemeinsamen Trägerelement 36 befestigt, das beispielsweise im wesentlichen aus Silizium besteht. Das Trägerelement 36 weist eine Stufe 40 auf, die eine erste Montagefläche 37 und eine zu dieser parallel liegende zweite Montagefläche 38 voneinander trennt.

Der Prismenwürfel 14 ist auf der ersten Montagefläche 37 benachbart zu einer zu den Montageflächen 37,38 senkrecht stehenden Absatzfläche 41 der Stufe 40 befestigt. Das hierzu verwendete Verbindungsmittel 29 muß nicht strahlungsdurchlässig sein. Auf der ersten Montagefläche 37 ist weiterhin mittels eines Verbindungsmittels 28 das Strahlungsfokussiermittel 8 befestigt, derart, daß dessen Strahleneintritts- und Strahlenaustrittsfläche 18 parallel zur dritten Seitenfläche 17 des Prismenwürfels 14 liegt und dieser zugewandt ist. In diesem Ausführungsbeispiel ist zwischen dem Strahlungsfokussiermittel 8 und dem Prismenwürfel 14 ein Spalt vorhanden, der mit einem transparenten Koppelmedium 26, z. B. Kunstharz, gefüllt ist. Ebenso kann natürlich auch das Strahlungsfokussiermittel 8 physikalischen Kontakt zum Prismenwürfel 14 aufweisen, insbesondere unmittelbar an diesem anliegen.

Auf der zweiten Montagefläche 38 ist das Sendebauelement 2 befestigt, derart, daß dessen Strahlenaustrittsfläche 11 dem Prismenwürfel 14 zugewandt ist, und unmittelbar an dessen erster Seitenfläche 5 anliegt. Zwischen dem Sendebauelement 2 und dem Prismenwürfel 14 kann natürlich ebenso wie bei dem Ausführungsbeispiel von Figur 3 ein Spalt vorhanden sein, der zur Reflexionsminderung mit einem transparenten Koppelmedium 24, z. B. Kunstharz, gefüllt ist, oder ein physikalischer Kontakt vorliegen.

Auf der zweiten Montagefläche 38 sind Metallisierungsschichten 42 aufgebracht. Diese sind mit elektrischen Kontakten des Sendebauelements 2 elektrisch leitend verbunden. Dazu sind beispielsweise das Sendebauelement 2 und die Metallisierungsschichten 42 derart ausgebildet, daß elektrische Kontakte des Sendebauelements 2 und die Metallisierungschichten 42 aufeinanderliegen und beispielsweise mittels eines metallischen Lotes oder mittels eines elektrisch leitenden Klebstoffes miteinander verbunden sind. Die Metallisierungschichten 42 dienen gleichzeitig als externe elektrische Anschlüsse für das Sendebauelement 2, die beispielsweise mittels Bonddrähten mit einem Leadframe verbunden sind. Ebenso können natürlich auch elektrische Kontakte des Sendebauelements 2 mittels Bonddrähten mit den Metallisierungsschichten 42 oder direkt mit einem Leadframe verbunden sein. Analoges gilt für das Ausführungsbeispiel von Figur 3. Auch dort können auf dem Trägerteil 1 entsprechende Metallisierungsschichten 42 vorgesehen sein.

Desweiteren ist bei dem Ausführungsbeispiel von Figur 4 zwischen dem auf dem Prismenwürfel 14 angeordneten Empfangsbauelement 3 und dem Prismenwürfel 14 ein Sperrfilter 27 angeordnet, das für die Wellenlänge der ausgesandten Strahlung 7 weitestgehend undurchlässig ist. Dadurch kann die Übersprechdämpfung des optoelektronischen Moduls gesenkt werden. Unter "Übersprechen" ist eine direkte Übertragung der vom Sendebauelement 2 ausgesandten Signale auf das Empfangsbauelement 3 zu verstehen. Das Sperrfilter 27 kann optional auf der Empfangsbauelement-Strahleneintrittsfläche 12 oder auf der zweiten Seitenfläche 6 des Prismenwürfels 14 aufgebracht sein. Desweiteren kann, falls aus optischen Gründen nötig, zwischen der Empfangsbauelement-Strahleneintrittsfläche 12 und dem Prismenwürfel 14 eine Sammellinse angeordnet sein.

Ist als Sendebauelement 2 eine Laserdiode verwendet, so kann diese mit der aktiven Seite nach oben (up-side up) oder mit der aktiven Zone nach unten (up-side down), d. h. in Richtung Trägerelement 36, montiert sein. Im zweiten Fall muß die Dikke des Laserdiodensubstrats sehr genau an die Lage der Strahlteilerschicht 10 angepaßt sein. Dies ist mit einem hohen Montage- und Justieraufwand verbunden. Im ersten Fall geht dagegen nur die Dicke der Epitaxieschicht der Laserdiode und die Dicke von gegebenenfalls vorhandenen elektrischen Anschlußmetallisierungsschichten 42 auf dem Trägerelement 36 in diese Betrachtung ein. Herstellungstoleranzen können hier sehr einfach im Mikrometerbereich und darunter gehalten werden. Die Justage ist dadurch deutlich vereinfacht. Analoges gilt natürlich auch für das oben beschriebene Ausführungsbeispiel von Figur 3.

Ist auch bei diesem Ausführungsbeispiel eine Monitordiode 21 vorgesehen, so kann diese vom Prismenwürfel 14 aus gesehen, hinter dem Sendebauelement 2 auf der zweiten Montagefläche 38 angeordnet sein. Ein Teil der im Sendebauelement 2 erzeugten Strahlung muß dann natürlich nach hinten ausgekoppelt werden, was bei Verwendung einer Laserdiode als Sendebauelement 2 mit einer Verschlechterung der Laserparameter verbunden ist, da auch der hintere Resonatorspiegel teildurchlässig ausgebildet sein muß. Diesen Nachteil weist das Ausführungsbeispiel von Figur 3 nicht auf; hier kann der hintere Spiegel einer als Sendebauelement 2 eingesetzten Laserdiode auf hohe Reflexion ausgelegt sein.

Bei dem in Figur 5 schematisch dargestellten Verfahrensablauf zum gleichzeitigen Herstellen einer Mehrzahl von erfindungsgemäßen optoelektronischen Modulen gemäß dem Ausführungsbeispiel von Figur 3 wird an einer ersten Hauptfläche 30 einer Scheibe 50 eine Anzahl von in einem Abstand parallel zueinander verlaufenden rechteckigen Nuten 54 hergestellt. Der in Figur 5 gezeigte Ausschnitt der Scheibe 50 weist vier funktionelle Einheiten auf, wobei die beiden vorderen im Schnitt dargestellt sind.

An einer der ersten Hauptfläche 51 gegenüberliegenen zweiten Hauptfläche 61 der Scheibe 50 wird entsprechend einem vorgegebenen Raster eine Anzahl von Strahlungsfokussiermitteln 8 ausgebildet. In diesem Fall sind dies z. B. mittels Ätzen oder Schleifen hergestellte sphärische oder asphärische Linsen. Die Strahlungsfokussiermittel 8 sind in Reihen angeordnet, die zu den Nuten 54 parallel verlaufen und diesen senkrecht gegenüberliegen. Die Scheibe 50 besteht aus einem für die ausgesandte Strahlung 7 und die empfangene Strahlung 13 durchlässigen Material. Man vergleiche dazu die Beschreibung zu Figur 3.

In jeder Nut 54 wird benachbart zu einer ersten Nutseitenfläche 55 ein im Querschnitt quadratischer Prismenbarren 52 befestigt. Die erste Nutseitenfläche 55 kann hierbei als Justierbezugsfläche für eine erste Seitenfläche 5 des Prismenbarrens 52 dienen. Jeder Prismenbarren 52 weist eine Strahlteilerschicht 10 auf, die auf einer zu seiner Längsmittelachse parallelen diagonalen Schnittfläche des Prismenbarrens 52 liegt. Der Winkel a zwischen der Strahlteilerschicht 10 und der ersten Hauptfläche 51 der Scheibe 50 beträgt somit 45°.

Besteht der Prismenbarren 52 beispielsweise aus Glas und die Scheibe 50 aus α-Silizium oder umgekehrt, so kann zum Befestigen der Prismenbarren 52 auf der Scheibe 50 anstelle des oben angegebenen Verbindens mittels eines Verbindungsmittels 29 anodisches Bonden eingesetzt werden. Bei dieser Technik werden die zu verbindenden Flächen aufeinander gelegt, beispielsweise auf etwa 450°C aufgeheizt und zwischen Glas und - Silizium eine Spannung von etwa -1000 V angelegt. Diese Verbindungstechnik ist auch dann möglich, wenn auch die Scheibe 50 aus Glas oder irgendeinem anderen Material besteht und an der Verbindungsstelle zum Prismenbarren 52 eine α-Siliziumschicht aufweist. Es müssen lediglich eine Glas- und eine α-Siliziumschicht aufeinanderliegen.

Auf der ersten Hauptfläche 51 der Scheibe 50 wird benachbart zu den ersten Seitenflächen 5 eine Mehrzahl von Sendebauelementen 2 befestigt, derart, daß elektrische Kontakte der Sendebauelemente 2 auf den dafür vorgesehenen auf der ersten Hauptfläche 51 der Scheibe 50 aufgebrachten Metallisierungsschichten 42 zu liegen kommen und mit diesen elektrisch leitend verbunden werden. Hier kann jeweils die Seitenfläche 5 als Justierbezugsfläche für die Sendebauelemente 2 dienen. Die Sendebauelemente 2 werden so angeordnet, daß jedem ein Strahlungsfokussiermittel 8 zugeordnet ist.

Um eine sichere Trennung der p- und n-Kontakte von Laserdioden-Sendebauelementen zu gewährleisten bzw. bei Verwendung von Lasern mit Stegwellenleiter (MCRW-Laser) eine Beschädigung des Steges zu vermeiden, wird vor der Montage der Sendebauelemente 2 jeweils zwischen den Metallisierungsschichten 42 eine Trennungsnut ausgebildet, beispielsweise eingeätzt.

Auf den zweiten Seitenflächen 6 des Prismenbarren 52 wird jeweils eine Mehrzahl von Empfangsbauelementen 3 mit elektrischen Kontakten 56 befestigt. Auch diese sind derart angeordnet, daß jedem ein Strahlungsfokussiermittel 8 zugeordnet ist.

Analog dazu wird jeweils benachbart zu einer der ersten Seitenfläche 5 gegenüberliegenden vierten Seitenfläche 22, in der Nut 54 eine Mehrzahl von Monitordioden 21 mit elektrischen Kontakten 56 befestigt.

Bei Verwendung von Laserdioden als Sendebauelemente 2 können diese mittels Metallisierungsbahnen 57 (in der Figur 5 gestrichelt eingezeichnet) auf der ersten Hauptfläche 51 der Scheibe 50 seriell verschaltet werden, so daß für den sogenannten Burn-In der Laserdioden nur jeweils die beiden äußeren, an den beiden Enden einzelner Laserdiodenzeilen 58 angeordneten Kontaktflächen 42 kontaktiert werden müssen. Die Burn-In für die derselben Laserdiodenzeile 58 zugeordneten Laserdioden kann somit auf besonders einfache Weise gleichzeitig durchgeführt werden. Darüberhinaus können auch die einzelnen Sendebauelemente 2 und Empfangsbauelemente 3 durch Kontaktieren der zugehörigen Metallisierungsschichten 42,56 und Anschließen an einen geeigneten Waferprober im Scheibenverbund, also im Nutzen, auf ihre elektrooptischen Parameter hin gemessen werden. Gleiches gilt natürlich auch für die Monitordioden 21.

Nach diesen Verfahrensschritten werden dann die Scheibe 50 und die Prismenbarren 52 entlang von ersten Trennlinien 59, die zwischen den einzelnen Sendebauelementen 2 senkrecht zu den Nuten 54 verlaufen, und die Scheibe 50 entlang von zweiten Trennlinien 60, die jeweils zwischen zwei Nuten 54 verlaufen, durchtrennt. Die so gefertigten jeweils ein Sendebauelement 2, ein Empfangsbauelement 3, eine Monitordiode 21, einen Prismenquader 14 und ein Strahlungsfokussiermittel 8 mit Trägerteil 1 aufweisenden einzelnen Vorrichtungen werden nachfolgend je nach vorgesehenem Einsatzbereich weiterverarbeitet, z. B. auf einem Leadframe befestigt und mit einer Vergußumhüllung 35 versehen.

## Patentansprüche

1. Verfahren zum Herstellen von mindestens einem Strahlteilerformkörper (14), der für elektromagnetische Strahlung durchlässig ist und in den eine Strahlteilerschicht (10) eingebettet ist, **gekennzeichnet durch** folgende Verfahrensschritte:
a) Herstellen einer ersten Scheibe (80), bestehend aus strahlungsdurchlässigem Material,
b) Aufbringen der Strahlteilerschicht (10) auf eine Hauptfläche der ersten Scheibe (80),
c) Aufbringen einer zweiten Scheibe (81), bestehend aus strahlungsdurchlässigem Material, auf die Strahlteilerschicht (10),
d) Durchtrennen der zweiten Scheibe (81) und Ansägen der Strahlteilerschicht (10) entlang von parallel zueinander verlaufenden Trennungslinien (82) mittels eines Trennwerkzeugs mit V-förmigem Schnittprofil (87), derart, daß voneinander getrennte erste Scheibenstreifen (84) entstehen,
e) Befestigen des die erste Scheibe (80), die zweite Scheibe (81) und die Strahlteilerschicht (10) aufweisenden Verbundes auf einer Trägerplatte (88), derart, daß die ersten Scheibenstreifen (84) der Trägerplatte (88) zugewandt sind,
f) Durchtrennen der ersten Scheibe (80) und der Strahlteilerschicht (10) entlang der parallel zueinander verlaufenden Trennungslinien (82) mittels eines Trennwerkzeugs mit V-förmigem Schnittprofil (87), derart, daß voneinander getrennte, den ersten Scheibenstreifen (84) gegenüberliegende zweite Scheibenstreifen (85) erzeugt werden und somit voneinander getrennte Strahlteilerformkörperbarren (52) mit einer gewünschten Querschnittsform des Strahlteilerformkörpers (14) ausgebildet werden, und
g) Durchtrennen der Stäbe (83) quer zu ihrer Längsachse.

2. Verfahren nach Anspruch 1, **dadurch gekennzeichnet,** daß nach dem Durchtrennen der zweiten Scheibe (81) und Ansägen der Strahlteilerschicht (10) die Schnittflächen (89) der ersten Scheibenstreifen (84) geschliffen und/oder poliert werden und daß nach dem Durchtrennen der ersten Scheibe (80) und der Strahlteilerschicht (10) die Schnittflächen (90) der zweiten Scheibenstreifen (85) geschliffen und/oder poliert werden.

3. Verfahren nach einem der Ansprüch 1 oder 2, **dadurch gekennzeichnet,** daß die Strahlteilerschicht (10) eine WDM-Schichtenfolge aufweist.

4. Verfahren nach einem der Ansprüche 1 bis 3, **dadurch gekennzeichnet,** daß als zweite Scheibe (81) eine Glasscheibe verwendet wird, daß eine an die Glasscheibe angrenzende Teilschicht der Strahlteilerschicht (10) aus Silizium besteht und daß die Glasscheibe mittels anodischem Bonden mit der Strahlteilerschicht (10) verbunden wird.

5. Verwendung eines gemäß einem der Ansprüche 1 bis 4 hergestellten Strahlteilerformkörpers (14) in einem optoelektronischen Modul zur bidirektionalen optischen Datenübertragung, **dadurch gekennzeichnet,** daß ein Sendebauelement (2) zum Aussenden von Strahlung, ein Empfangsbauelement (3) zum Empfangen von Strahlung, ein Strahlungsfokussiermittel (8) zum Fokussieren von Strahlung und der Strahlteilerformkörper (14) derart ausgebildet und zueinander angeordnet sind, daß im Betrieb des optoelektronischen Moduls zumindest ein Teil einer von dem Sendebauelement(2) ausgesandten Strahlung (7) in eine optisch an das optoelektronische Modul angekoppelte optische Vorrichtung (9) eingekoppelt wird und daß zumindest ein Teil einer aus der optischen Vorrichtung (9) ausgekoppelten, empfangenen Strahlung (13) in das Empfangsbauelement (3) eingekoppelt wird.

6. Verwendung gemäß Anspruch 5, **dadurch gekennzeichnet,** daß der Strahlteilerformkörper (14) die Form eines Quaders aufweist, daß die Strahlteilerschicht (10) in einer diagonalen Schnittfläche des Quaders liegt und daß eine senkrecht zur Strahlteilerschicht (10) liegende Schnittfläche des Quaders die Form eines Rechtecks, insbesondere eines Quadrats aufweist.

7. Verwendung gemäß Anspruch 5 oder 6, **dadurch gekennzeichnet,** daß der Strahlteilerformkörper (14) mindestens eine erste Seitenfläche (5), eine zweite Seitenfläche (6) und eine dritte Seitenfläche (17) aufweist,
daß die erste Seitenfläche (5) und die zweite Seitenfläche (6) zueinander geneigt sind,
daß die dritte Seitenfläche (17) und die zweite Seitenfläche (6) oder die dritte Seitenfläche (17) und die erste Seitenfläche (5) zueinander geneigt sind,
daß die erste Seitenfläche (5) und die dritte Seitenfläche (17) bzw. die zweite Seitenfläche (6) und die dritte Seitenfläche (17) gegenüberliegende Seitenflächen des Strahlteilerformkörpers (14) sind,
daß eine Sendebauelement-Strahlenaustrittsfläche (11) des Sendebauelements (2) der ersten Seitenfläche (5) zugewandt ist,
daß eine Empfangsbauelement-Strahleneintrittsfläche (12) des Empfangsbauelements (3) der zweiten Seitenfläche (6) zugewandt ist,
daß eine Strahleneintritts- und Strahlenaustrittsfläche (18) des Strahlungsfokussiermittels (8) der dritten Seitenfläche (17) zugewandt ist und
daß die Strahlteilerschicht (10) derart angeordnet ist, daß sie sowohl die Strahlachse (19) der ausgesandten Strahlung (7) als auch die Strahlachse (20) der empfangenen Strahlung (13) schneidet.

8. Verwendung gemäß Anspruch 7, **dadurch gekennzeichnet,** daß die erste Seitenfläche (5) und die zweite Seitenfläche (6) zueinander senkrecht stehen,
daß die dritte Seitenfläche (17) und die zweite Seitenfläche (6) oder die dritte Seitenfläche (17) und die erste Seitenfläche (5) zueinander senkrecht stehen,
daß die erste Seitenfläche (5) und die dritte Seitenfläche (17) bzw. die zweite Seitenfläche (6) und die dritte Seitenfläche (17) parallel zueinander liegende gegenüberliegende Seitenflächen des Strahlteilerformkörpers (14) sind.

9. Verwendung gemäß Anspruch 7 oder 8, **dadurch gekennzeichnet,** daß die Sendebauelement-Strahlenaustrittsfläche (11) des Sendebauelements (2) mit der ersten Seitenfläche (5) verbunden ist, daß die Empfangsbauelement-Strahleneintrittsfläche (12) des Empfangsbauelements (3) mit der zweiten Seitenfläche (6) verbunden ist und daß die Strahleneintritts- und Strahlenaustrittsfläche (18) des Strahlungsfokussiermittels (8) mit der dritten Seitenfläche (17) verbunden ist.

10. Verwendung gemäß einem der Ansprüche 5 bis 9, **dadurch gekennzeichnet,** daß das Strahlungsfokussiermittel (8) ein Trägerteil (1) aufweist, das mittels eines strahlungsdurchlässigen Verbindungsmittels (29) mit dem Strahlteilerformkörper (14) verbunden ist, daß das Trägerteil (1) im wesentlichen aus einem für die ausgesandte Strahlung (7) und die empfangene Strahlung (13) durchlässigen Material besteht und daß das Sendebauelement (2) und die optische Vorrichtung (9) auf verschiedenen Seiten des Trägerteiles (1) angeordnet sind.

11. Verwendung gemäß einem der Ansprüche 5 bis 10, **dadurch gekennzeichnet,** daß eine Monitordiode (21) vorgesehen ist, die eine einer vierten Seitenfläche (22) des Strahlteilerformkörpers (14) zugewandte Monitordiodenstrahleneintrittsfläche (23) aufweist und daß die Stahlteilerschicht (10) derart für die ausgesandte Strahlung (7) teildurchlässig ausgebildet ist, daß ein erster Teil der ausgesandten Stahlung (7) auf die Monitordiodenstrahleneintrittsfläche (23) trifft.

12. Verwendung gemäß Anspruch 7 bis 11, **dadurch gekennzeichnet,** daß die Strahlachse (19) der ausgesandten Strahlung (7) und die Strahlachse (20) der empfangenen Strahlung (13) im wesentlichen parallel verlaufen, daß die Strahlteilerschicht (10) derart ausgebildet und angeordnet ist, daß sie einen in die optische Vorrichtung (9) einzukoppelnden Teil der ausgesandten Strahlung (7) durchläßt und die empfangene Strahlung (13) größtenteils reflektiert und zum Empfangsbauelement (3) hin umlenkt und daß das Strahlungsfokussiermittel (8) und das Sendebauelement (2) auf gegenüberliegenden Seiten des Strahlteilerformkörpers (14) angeordnet sind bzw. daß die Strahlachse (19) der ausgesandten Strahlung (7) und die Strahlachse (20) der empfangenen Strahlung (13) einen Winkel von 90° einschließen, daß die Strahlteilerschicht (10) derart ausgebildet und angeordnet ist, daß sie die ausgesandte Strahlung (7) zumindest größtenteils reflektiert, so daß die Strahlachse der reflektierten Strahlung parallel zur Strahlachse (20) der empfangenen Strahlung (13) verläuft und daß sie zumindest einen Teil der empfangenen Strahlung (13) durchläßt, so daß dieser auf die Empfangsbauelement-Strahleintrittsfläche (12) trifft.

13. Verwendung gemäß Anspruch 8 oder gemäß Anspruch 8 und einem der Ansprüche 9 bis 12, **dadurch gekennzeichnet,** daß die Strahlachse (19) der ausgesandten Strahlung (7) und die Strahlachse (20) der empfangenen Strahlung (13) im wesentlichen parallel verlaufen, daß die Strahlteilerschicht (10) derart ausgebildet und angeordnet ist, daß sie einen in die optische Vorrichtung (9) einzukoppelnden Teil der ausgesandten Strahlung (7) durchläßt und die empfangene Strahlung (13) größtenteils reflektiert und zum Empfangsbauelement (3) hin umlenkt und daß das Strahlungsfokussiermittel (8) und das Sendebauelement (2) auf gegenüberliegenden Seiten des Strahlteilerformkörpers (14) angeordnet sind bzw. daß die Strahlachse (19) der ausgesandten Strahlung (7) und die Strahlachse (20) der empfangenen Strahlung (13) einen Winkel von 90° einschließen, daß die Strahlteilerschicht (10) derart ausgebildet und angeordnet ist, daß sie die ausgesandte Strahlung (7) zumindest größtenteils reflektiert, so daß die Strahlachse der reflektierten Strahlung parallel zur Strahlachse (20) der empfangenen Strahlung (13) verläuft und daß sie zumindest einen Teil der empfangenen Strahlung (13) durchläßt, so daß dieser auf die Empfangsbauelement-Strahleintrittsfläche (12) trifft.

## Claims

1. Method for producing at least one beam splitter moulded part (14) which is transparent to electromagnetic radiation and embedded in one beam splitter layer (10), characterized by the following method steps:
a) producing a first wafer (80), consisting of radiation-transparent material,
b) applying the beam splitter layer (10) to a main surface of the first wafer (80),
c) applying a second wafer (81), consisting of radiation-transparent material, to the beam splitter layer (10),
d) severing the second wafer (81) and incipiently sawing the beam splitter layer (10) along separating lines (82), running parallel to one another, by means of a separating tool with a V-shaped cutting profile (87), in such a way as to produce first wafer strips (84) separated from one another,
e) fastening the assembly comprising the first wafer (80), the second wafer (81) and the beam splitter layer (10) on a carrier plate (88) in such a way that the first wafer strips (84) face the carrier plate (88),
f) severing the first wafer (80) and the beam splitter layer (10) along the separating lines (82), running parallel to one another, by means of a separating tool with a V-shaped cutting profile (87) in such a way as to produce second wafer strips (85) separated from one another and situated opposite the first wafer strips (84), and thus to construct beam splitter moulded part ingots (52) separated from one another and having a desired cross-sectional shape of the beam splitter moulded part (14), and
g) severing the bars (83) transverse to their longitudinal axis.

2. Method according to Claim 1, characterized in that after the severing of the second wafer (81) and incipient sawing of the beam splitter layer (10), the cut surfaces (89) of the first wafer strips (84) are ground and/or polished, and in that after the severing of the first wafer (80) and the beam splitter layer (10), the cut surfaces (90) of the second wafer strips (85) are ground and/or polished.

3. Method according to one of Claims 1 or 2, characterized in that the beam splitter layer (10) has a WDM layer sequence.

4. Method according to one of Claims 1 to 3, characterized in that a glass wafer is used as second wafer (81), in that a sublayer, bordering on the glass wafer, of the beam splitter layer (10) consists of silicon, and in that the glass wafer is connected to the beam splitter layer (10) by means of anodic bonding.

5. Use of a beam splitter moulded part (14), produced according to one of Claims 1 to 4, in an optoelectronic module for bidirectional optical data transmission, characterized in that a transmitting component (2) for emitting radiation, a receiving component (3) for receiving radiation, a radiation-focusing means (8) for focusing radiation, and the beam splitter moulded part (14) are constructed and arranged relative to one another in such a way that during operation of the optoelectronic module, at least a portion of a beam (7) emitted by the transmitting component (2) is launched into an optical device (9) coupled optically to the optoelectronic module, and in that at least a portion of a received beam (13) coupled out of the optical device (9) is launched into the receiving component (3).

6. Use according to Claim 5, characterized in that the beam splitter moulded part (14) has the shape of a cuboid, in that the beam splitter layer (10) lies in a diagonal cut surface of the cuboid, and in that a cut surface of the cuboid lying perpendicular to the beam splitter layer (10) has the shape of a rectangle, in particular a square.

7. Use according to Claim 5 or 6, characterized in that the beam splitter moulded part (14) has at least a first lateral surface (5), a second lateral surface (6) and a third lateral surface (17),
in that the first lateral surface (5) and the second lateral surface (6) are inclined to one another,
in that the third lateral surface (17) and the second lateral surface (6) or the third lateral surface (17) and the first lateral surface (5) are inclined to one another,
in that the first lateral surface (5) and the third lateral surface (17) or the second lateral surface (6) and the third lateral surface (17) are opposite lateral surfaces of the beam splitter moulded part (14),
in that a transmitting component beam entrance surface (11) of the transmitting component (2) faces the first lateral surface (5),
in that a receiving component beam entrance surface (12) of the receiving component (3) faces the second lateral surface (6),
in that a beam entry and beam entrance surface (18) of the beam-focusing means (8) faces the third lateral surface (17), and
in that the beam splitter layer (10) is arranged in such a way that it intersects both the beam axis (19) of the emitted beam (7) and the beam axis (20) of the received beam (13).

8. Use according to Claim 7, characterized in that the first lateral surface (5) and the second lateral surface (6) are mutually perpendicular,
in that the third lateral surface (17) and the second lateral surface (6) or the third lateral surface (17) and the first lateral surface (5) are mutually perpendicular,
and in that the first lateral surface (5) and the third lateral surface (17) or the second lateral surface (6) and the third lateral surface (17) are mutually parallel opposite lateral surfaces of the beam splitter moulded part (14).

9. Use according to Claim 7 or 8, characterized in that the transmitting component beam entrance surface (11) of the transmitting component (2) is connected to the first lateral surface (5), in that the receiving component beam entrance surface (12) of the receiving component (3) is connected to the second lateral surface (6), and in that the beam entry and beam entrance surface (18) of the radiation-focusing means (8) is connected to the third lateral surface (17).

10. Use according to one of Claims 5 to 9, characterized in that the radiation-focusing means (8) has a carrier part (1) which is connected to the beam splitter moulded part (14) by means of a radiation-transparent connecting means (29), in that the carrier part (1) consists essentially of a material transparent to the emitted radiation (7) and the received radiation (13), and in that the transmitting component (2) and the optical device (9) are arranged on different sides of the carrier part (1).

11. Use according to one of Claims 5 to 10, characterized in that provision is made of a monitor diode (21) which has a monitor diode beam entrance surface (23) facing a fourth lateral surface (22) of the beam splitter moulded part (14), and in that the beam splitter layer (10) is constructed to be partially transparent to the emitted radiation (7) in such a way that a first portion of the emitted radiation (7) strikes the monitor diode beam entrance surface (23).

12. Use according to Claims 7 to 11, characterized in that the beam axis (19) of the emitted radiation (7) and the beam axis (20) of the received radiation (13) run essentially parallel, in that the beam splitter layer (10) is constructed and arranged in such a way that it passes a portion of the emitted radiation (7) to be launched into the optical device (9) and for the most part reflects the received radiation (13) and deflects it towards the receiving component (3), and in that the radiation-focusing means (8) and the transmitting component (2) are arranged on opposite sides of the beam splitter moulded part (14), or in that the beam axis (19) of the emitted radiation (7) and the beam axis (20) of the received radiation (13) enclose an angle of 90°, in that the beam splitter layer (10) is constructed and arranged in such a way that it at least for the most part reflects the emitted radiation (7), with the result that the beam axis of the reflected radiation runs parallel to the beam axis (20) of the received radiation (13), and in that it passes at least a portion of the received radiation (13), with the result that the latter strikes the receiving component beam entrance surface (12).

13. Use according to Claim 8 or according to Claim 8 and one of Claims 9 to 12, characterized in that the beam axis (19) of the emitted radiation (7) and the beam axis (20) of the received radiation (13) run essentially parallel, in that the beam splitter layer (10) is constructed and arranged in such a way that it passes a portion of the emitted radiation (7), which portion is to be launched into the optical device (9) and for the most part reflects the received radiation (13) and deflects it towards the receiving component (3), and in that the radiation-focusing means (8) and the transmitting component (2) are arranged on opposite sides of the beam splitter moulded part (14), or in that the beam axis (19) of the emitted radiation (7) and the beam axis (20) of the received radiation (13) enclose an angle of 90°, in that the beam splitter layer (10) is constructed and arranged in such a way that it at least for the most part reflects the emitted radiation (7), with the result that the beam axis of the reflected radiation runs parallel to the beam axis (20) of the received radiation (13), and in that it passes at least a portion of the received radiation (13), with the result that the latter strikes the receiving component beam entrance surface (12).

## Revendications

1. Procédé de fabrication d'au moins un corps (14) façonné diviseur de faisceau, qui laisse passer le rayonnement électromagnétique et dans lequel est incorporée une couche (10) diviseuse de faisceau, caractérisé par les étapes suivantes :
a) fabrication d'une première galette (80), constituée de matériau laissant passer le rayonnement,
b) apposition de la couche (10) diviseuse de faisceau sur une face principale de la première galette (80),
c) apposition d'une deuxième galette (81), constituée de matériau laissant passer le rayonnement, sur la couche (10) diviseuse de faisceau,
d) sectionnement de la deuxième galette (81) et sciage de la couche (10) diviseuse de faisceau le long de lignes (82) de séparation s'étendant parallèlement entre elles, au moyen d'un outil à tronçonner à profil (87) de coupe en forme de V, de telle sorte qu'on obtient des premières bandes (84) de galette séparées les unes des autres,
e) fixation sur une plaque (88) de support de l'assemblage comprenant la première galette (80), la deuxième galette (81) et la couche (10) diviseuse de faisceau, de telle sorte que les premières bandes (84) de galette sont tournées vers la plaque (88) de support,
f) sectionnement de la première galette (80) et de la couche (10) diviseuse de faisceau le long de lignes (82) de séparation s'étendant parallèlement entre elles, au moyen d'un outil à tronçonner à profil (87) de coupe en forme de V, de telle sorte qu'on produit des deuxièmes bandes (85) de galette séparées les unes des autres, opposées aux premières bandes (84) de galette, et donc qu'on forme des barrettes (52) de corps façonné diviseur de faisceau, séparées les unes des autres, ayant la forme de section souhaitée du corps (14) façonné diviseur de faisceau, et
g) sectionnement des barres (83) transversalement à leur axe longitudinal.

2. Procédé suivant la revendication 1, caractérisé en ce qu'à la suite du sectionnement de la deuxième galette (81) et du sciage de la couche (10) diviseuse de faisceau, on ponce et/ou on polit les faces (89) de coupe des premières bandes (84) de galette, et en ce qu'à la suite du sectionnement de la première galette (80) et de la couche (10) diviseuse de faisceau, on ponce et/ou on polit les faces (90) de coupe des deuxièmes bandes (85) de galette.

3. Procédé suivant la revendication 1 ou 2, caractérisé en ce que la couche (10) diviseuse de faisceau comporte une succession de couches utilisant la technologie WDM (Wavelength Division Multiplexing - multiplexage par division en longueurs d'onde).

4. Procédé suivant l'une des revendications 1 à 3, caractérisé en ce qu'on utilise comme deuxième galette (81) une galette en verre, en ce qu'une couche partielle, limitrophe de la galette en verre, de la couche (10) diviseuse de faisceau est constituée de silicium, et en ce que la galette en verre est assemblée à la couche (10) diviseuse de faisceau par bonding anodique.

5. Utilisation d'un corps (14) façonné diviseur de faisceau fabriqué suivant l'une des revendications 1 à 4 dans un module optoélectronique pour la transmission optique bidirectionnelle de données, caractérisée en ce qu'un composant (2) émetteur destiné à émettre un rayonnement, un composant (3) récepteur destiné à recevoir un rayonnement, un moyen (8) focalisateur de rayonnement destiné à focaliser un rayonnement et le corps (14) façonné diviseur de faisceau sont conçus et disposés les uns par rapport aux autres de telle sorte que, lorsque le module optoélectronique est en service, au moins une partie d'un rayonnement (7) émis par le composant (2) émetteur est injectée dans un dispositif (9) optique accouplé optiquement au module optoélectronique, et qu'au moins une partie d'un rayonnement (13) reçu, découplé du dispositif (9) optique, est injectée dans le composant (3) récepteur.

6. Utilisation suivant la revendication 5, caractérisée en ce que le corps (14) façonné diviseur de faisceau a la forme d'un parallélépipède, en ce que la couche (10) diviseuse de faisceau se trouve dans un plan diagonal de section du parallélépipède, et en ce qu'un plan de section du parallélépipède perpendiculaire à la couche (10) diviseuse de faisceau a la forme d'un rectangle, notamment d'un carré.

7. Utilisation suivant la revendication 5 ou 6, caractérisée en ce que le corps (14) façonné diviseur de faisceau comporte au moins une première face (5) latérale, une deuxième face (6) latérale et une troisième face (17) latérale,
en ce que la première face (5) latérale et la deuxième face (6) latérale sont inclinées l'une par rapport à l'autre,
en ce que la troisième face (17) latérale et la deuxième face (6) latérale ou la troisième face (17) latérale et la première face (5) latérale sont inclinées l'une par rapport à l'autre,
en ce que la première face (5) latérale et la troisième face (17) latérale, ou respectivement la deuxième face (6) latérale et la troisième face (17) latérale, sont des faces latérales opposées du corps (14) façonné diviseur de faisceau,
en ce qu'une face (11) de sortie de faisceau du composant (2) émetteur est tournée vers la première face (5) latérale,
en ce qu'une face (12) d'entrée de faisceau du composant (3) récepteur est tournée vers la deuxième face (6) latérale,
en ce qu'une face (18) d'entrée et de sortie de faisceau du moyen (8) focalisateur de rayonnement est tournée vers la troisième face (17) latérale,
et en ce que la couche (10) diviseuse de faisceau est disposée de telle sorte qu'elle coupe tant l'axe (19) du rayonnement (7) émis que l'axe (20) du rayonnement (13) reçu.

8. Utilisation suivant la revendication 7, caractérisée en ce que la première face (5) latérale et la deuxième face (6) latérale sont mutuellement perpendiculaires,
en ce que la troisième face (17) latérale et la deuxième face (6) latérale ou la troisième face (17) latérale et la première face (5) latérale sont mutuellement perpendiculaires,
en ce que la première face (5) latérale et la troisième face (17) latérale, ou respectivement la deuxième face (6) latérale et la troisième face (17) latérale, sont des faces latérales opposées mutuellement parallèles du corps (14) façonné diviseur de faisceau.

9. Utilisation suivant la revendication 7 ou 8, caractérisée en ce que la face (11) de sortie de faisceau du composant (2) émetteur est assemblée à la première face (5) latérale, en ce que la face (12) d'entrée de faisceau du composant (3) récepteur est assemblée à la deuxième face (6) latérale, et en ce que la face (18) d'entrée et de sortie de faisceau du moyen (8) focalisateur de rayonnement est assemblée à la troisième face (17) latérale.

10. Utilisation suivant l'une des revendications 5 à 9, caractérisée en ce que le moyen (8) focalisateur de rayonnement comporte une partie (1) de support, qui est assemblée au corps (14) façonné diviseur de faisceau au moyen d'un agent (29) de liaison laissant passer le rayonnement, en ce que la partie (1) de support est constituée pour l'essentiel d'un matériau laissant passer le rayonnement (7) émis et le rayonnement (13) reçu, et en ce que le composant (2) émetteur et le dispositif (9) optique sont disposés sur des côtés différents de la partie (1) de support.

11. Utilisation suivant l'une des revendications 5 à 10, caractérisée en ce qu'il est prévu une diode (21) de contrôle, qui comporte une face (23) d'entrée de faisceau tournée vers une quatrième face (22) latérale du corps (14) façonné diviseur de faisceau, et en ce que la couche (10) diviseuse de faisceau est conçue pour laisser passer partiellement le rayonnement (7) émis de telle sorte qu'une première partie du rayonnement (7) émis rencontre la face (23) d'entrée de faisceau de la diode de contrôle.

12. Utilisation suivant l'une des revendications 7 à 11, caractérisée en ce que l'axe (19) du rayonnement (7) émis et l'axe (20) du rayonnement (13) reçu s'étendent sensiblement parallèlement entre eux, en ce que la couche (10) diviseuse de faisceau est conçue et disposée de telle sorte qu'elle laisse passer une partie du rayonnement (7) émis à coupler dans le dispositif (9) optique et qu'elle réfléchit pour sa majeure partie le rayonnement (13) reçu et le dévie vers le composant (3) récepteur, et en ce que le moyen (8) focalisateur de rayonnement et le composant (2) émetteur sont disposés sur des côtés opposés du corps (14) façonné diviseur de faisceau,
ou en ce que l'axe (19) du rayonnement (7) émis et l'axe (20) du rayonnement (13) reçu forment entre eux un angle de 90°, et en ce que la couche (10) diviseuse de faisceau est conçue et disposée de telle sorte qu'elle réfléchit au moins pour sa majeure partie le rayonnement (7) émis, de sorte que l'axe du rayonnement réfléchi s'étend parallèlement à l'axe (20) du rayonnement (13) reçu, et qu'elle laisse passer au moins une partie du rayonnement (13) reçu, de sorte que ce dernier rencontre la face (12) d'entrée de faisceau du composant récepteur.

13. Utilisation suivant la revendication 8 ou suivant la revendication 8 et l'une des revendications 9 à 12, caractérisée en ce que l'axe (19) du rayonnement (7) émis et l'axe (20) du rayonnement (13) reçu s'étendent sensiblement parallèlement entre eux, en ce que la couche (10) diviseuse de faisceau est conçue et disposée de telle sorte qu'elle laisse passer une partie du rayonnement (7) émis à coupler dans le dispositif (9) optique et qu'elle réfléchit pour sa majeure partie le rayonnement (13) reçu et le dévie vers le composant (3) récepteur, et en ce que le moyen (8) focalisateur de rayonnement et le composant (2) émetteur sont disposés sur des côtés opposés du corps (14) façonné diviseur de faisceau,
ou en ce que l'axe (19) du rayonnement (7) émis et l'axe (20) du rayonnement (13) reçu forment entre eux un angle de 90°, et en ce que la couche (10) diviseuse de faisceau est conçue et disposée de telle sorte qu'elle réfléchit au moins pour sa majeure partie le rayonnement (7) émis, de sorte que l'axe du rayonnement réfléchi s'étend parallèlement à l'axe (20) du rayonnement (13) reçu, et qu'elle laisse passer au moins une partie du rayonnement (13) reçu, de sorte que ce dernier rencontre la face (12) d'entrée de faisceau du composant récepteur.
